# EUROPEAN PATENT SPECIFICATION

(11) **EP 1 232 652 B1**
(45) Date of publication and mention of the grant of the patent: **14.05.2003**
(21) Application number: 00991391.4
(22) Date of filing: 10.11.2000
(51) Int. Cl.: H04N 7/24, H04N 5/00

(54) **OBJECT SECURITY IMPLEMENTATION**
DURCHFÜHRUNG DER OBJEKTSICHERUNG
MISE EN OEUVRE DE LA SECURITE D'UN OBJET

(30) Priority: 12.11.1999 US 165095 P; 30.12.1999 US 173963 P; 28.01.2000 US 493984
(43) Date of publication of application: 21.08.2002
(73) Proprietor: General Instrument Corporation, Horsham, Pennsylvania 19044 (US)
(72) Inventor: EISENBART, Robert, S., Chula Vista, CA 91910 (US); CHEN, Annie, O., Del Mar, CA 92014 (US); MURPHY, Patrick, J., San Diego, CA 92123 (US)
(74) Representative: Bohnenberger, Johannes, Dr.
(86) International application number: US0031043
(87) International publication number: WO01035670

(56) References cited:
- EP-A- 0 752 786
- EP-A- 0 914 001
- EP-A- 0 946 019
- WO-A-98/56180
- FR-A- 2 768 004
- US-A- 5 005 200

## Description

This application claims the benefit of U.S. Provisional Application No. 60/165,095 filed on November 12, 1999 and U.S. Provisional Application No. 60/173,963. filed on December 30, 1999.

### BACKGROUND OF THE INVENTION

This invention relates in general to conditional access systems and, more specifically, to authenticating information sent to a set top box.

Cable television (TV) providers distribute content to users. Conditional access (CA) systems distribute video programming from a headend of the cable TV provider to a set top box associated with a user. The headend includes hardware that receives video and distributes it to the set top boxes within the CA system. Select set top boxes are allowed to decode certain video programs according to entitlement information sent by the cable TV provider to the set top box.

Video programs are broadcast to all set top boxes, but only a subset of those boxes are given access to specific video programs. For example, only those that have ordered a pay per view boxing match are allowed to view it even though every set top box may receive the match. Once a user orders the pay per view program, an entitlement message is broadcast in encrypted form to all set top boxes. Only the particular set top box the entitlement message is intended for can decrypt it. Inside the decrypted entitlement message is a key that will decrypt the pay per view program. With that key, the set top box decrypts the pay per view program as it is received in real-time. Some systems sign entitlement messages.

As described above, conventional CA systems only check entitlement of content upon receipt. More sophisticated techniques are always desired to further ensure against content being received from unintended sources.

WO-A-98 56180 discloses a global conditional access system for broadcast services. US-A-5005200 discloses a public key/signature cryptosystem with enhanced digital signature certification.

### SUMMARY OF THE INVENTION

The invention is as set out in sending method claim 1, receiving method claim 8 and system claim 14.

According to the invention, disclosed are an apparatus and methods for authenticating information sent to a set top box. In one embodiment, a method for distributing information that includes a signature is disclosed. In one step the signature is generated over first information and second information. The first information is sent over a network in another step. The second information is sent over the network separately from the step of sending the first information. The signature is sent over the network separately from at least one of the first information and the second information.

In another embodiment, a method for detecting modification of information is disclosed. First and second information are separately received from a network. A signature is received separately from the network from at least one of the first and second information. The signature is authenticated over the first and second information.

In yet another embodiment, a conditional access system for detecting modification of information is disclosed. Included in the conditional access system are an information object and authorization information. A signature is generated over the information object and the authorization information.

### BRIEF DESCRIPTION OF THE DRAWINGS

Fig. 1 is a block diagram showing one embodiment of a conditional access system;
Fig. 2 is a block diagram illustrating another embodiment of a conditional access system;
Fig. 3 is a block diagram depicting an embodiment of an authorization message;
Fig. 4 is a block diagram showing an embodiment of a software message;
Fig. 5 is a block diagram illustrating an embodiment of a signatory group that includes portions of the authorization message and the software message;
Fig. 6 is a flow diagram depicting an embodiment of a process for sending an authorization message and a software message to a set top box; and
Fig. 7 is a flow diagram showing an embodiment of a method for processing an authorization message and a software message.

### DESCRIPTION OF THE SPECIFIC EMBODIMENTS

The present invention authenticates information sent to a television set top box. In one embodiment, a software object and a separate data structure containing authorization information are digitally signed with a single signature covering both. The signature is attached to the authorization data structure. The data structure and the software object are sent to the set top box separately. When the set top box receives both, the signature is verified. This process allows authentication of both the data structure and software object in a more robust manner.

In the Figures, similar components and/or features have the same reference label. Further, various components of the same type are distinguished by following the reference label by a dash and a second label that distinguishes among the similar components. If only the first reference label is used in the specification, the description is applicable to any one of the several similar components having the second label.

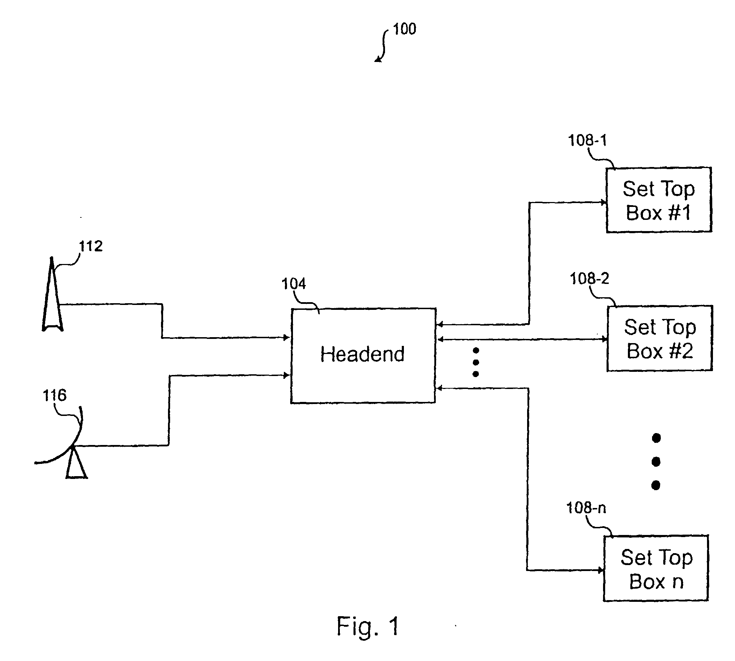

Referring first to Fig. 1, a block diagram of one embodiment of a conditional access (CA) system 100 is shown. The CA system 100 selectively provides content to a number of users based upon certain conditions being satisfied. Included in the system are a headend 104, number of set top boxes 108, local programming receiver 112, and satellite dish 116.

The headend 104 receives content and distributes that content to users. Content can include video, audio, interactive video, software, firmware, and/or data. Distributing firmware content allows updating the embedded programs within the set top box 108. This content is received from a variety of sources which include the satellite dish 116, local programming receiver 112, microwave receivers, packet switched networks, etc. Each set top box 108 has a unique address that allows sending entitlement information to an individual set top box 108. In this way, one set top box 108-1 can entitle a particular content while another 108-2 cannot. Equipment within the headend 104 regulates which set top boxes 108 are entitled to which content.

The content is generally distributed in digital form through an analog channel that contains multiple content streams. All the content streams are statistically multiplexed together into a digital stream modulated upon the analog carrier channel. The separate content streams are separated by packet identification (PID) information such that the individual content streams can be removed according to their unique PID information. There are around one hundred and twenty analog channels in this embodiment of the system 100. Other embodiments could distribute the content with satellite dishes, microwave antennas, RF transmitters, packet switched networks, cellular data modems, carrier current, or phone lines.

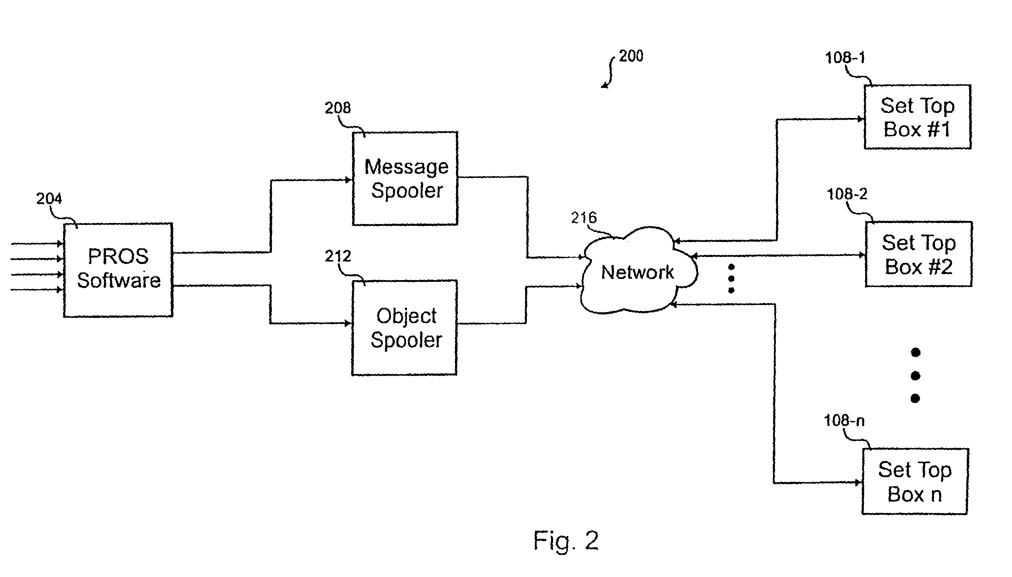

Referring next to Fig. 2, a block diagram of another embodiment of a CA system 200 is illustrated. This embodiment 200 shows the software objects 204, 208, 212 that receive the content and distribute it to the set top boxes 108. These software objects 204, 208, 212 could reside in the headed 104. Included in the CA system 200 are a permissions, resource, object signatory (PROS) software 204; a message spooler 208; an object spooler 212; a distribution network 216; and a number of set top boxes 108.

The PROS software 204 receives information from various sources and produces authorization and software messages with that information. Things such as software access requirements, resource access requirements, configuration data, unsigned software objects, object information, etc. are received and processed by the PROS software 204. The resource access requirements indicate which set top box hardware resources can be accessed by the software object. Included in the configuration data is the domain identifier of the cable provider and the signing key(s). The object information contains the identification and version information of the software object. All this information is processed by the PROS software to produce the authorization and software messages. At this point, the messages are complete except for checksums.

The message and object spoolers 208, 212 respectively receive the authorization and software messages and stores them. After adding a checksum, the messages are sent to the set top boxes 108. Even though these messages are broadcast to a number of set top boxes 108, addressing individual domain identifiers and set top box identifiers allows selecting a subset of the set top boxes 108 to receive the messages. The spoolers 208, 212 queue the messages, segment and format them for transport and couple them to the network 216. As the messages are sent out to the network 216, the spoolers 208, 212 calculate a checksum for each message and append that checksum to the end of the message.

The network 216 transports the messages from the message and object spoolers 208, 212 to the set top boxes 108. The network 216 could include a control data channel, MPEG data stream and/or packet switched network. The control data channel is an out of band data channel that contains configuration and control information. Messages sent in a MPEG data stream are statistically multiplexed on an analog carrier channel where the messages are distinguished by unique PIDs. The packet switched network could be the Internet, a network and/or a telephone line connection.

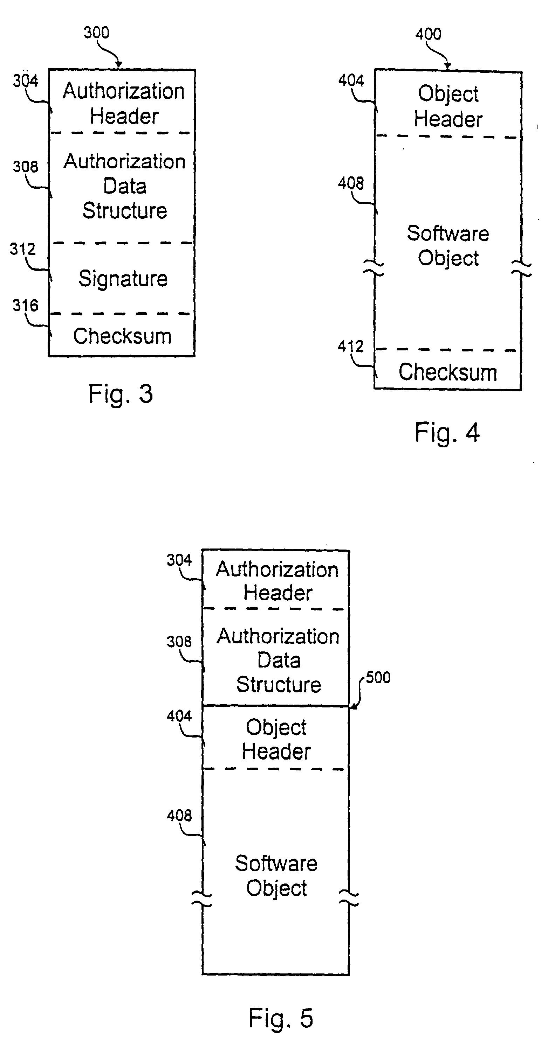

With reference to Figs. 3-5, an authorization message 300, a software message 400 and a signatory group 500 are respectively shown in block diagram form. Included in the authorization message 300 of Fig. 3 are an authorization header 304, an authorization data structure 308, a signature 312, and a first checksum 316. The authorization message 300 has information used to both authenticate and authorize the software message 400. Forming the software message of Fig. 4 are an object header 404, a software object 408 and a second checksum 412. The software message 400 serves as the transport for the software object 408. The signatory group 500 includes components of the authorization message 300 and software message 400 arranged end-to-end. The signature 312 is calculated over the whole signatory group 500. More specifically, the signatory group 500 of Fig. 5 includes the authorization header 304, authorization data structure 308, object header 404, and software object 408.

The authorization header 304 indicates the configuration of the authorization message 300. Included in the header 304 are a subtype identifier and message version. The subtype identifier distinguishes the various types of authorization messages 300 from one another. In this embodiment, there are authorization message subtypes corresponding to software objects and resources. Software object subtypes have a corresponding software message 400, but resource subtypes do not. Accordingly, the subtype identifier is used to determine if there is a software message 400 associated with an authorization message 300. There may be several types of software object subtypes and resource subtypes for a given system and the message version allows distinguishing the various types.

The authorization data structure 308 provides authorization information to the set top box 108. In the case of an authorization message subtype corresponding to a software object, the authorization data structure 308 contains an object identifier, a software version, cost information, entitlement information, lifetime information, and one or more program tiers. The object identifier is unique for each software object 408 and allows attributing an authorization message 300 to its corresponding software message 400. Version information is included in the data structure 308 to indicate the version of the software object 408.

Portions of the authorization data structure 308 are used to determine availability of the software object 408 to the set top box 108. The cost information indicates to the set top box 108, and sometimes the user, the price associated with the software object 408. Entitlement information is used to determine if the particular set top box 108 is authorized to accept the software object 408. The entitlement information may include a key if the software object 408 is encrypted with a symmetric key. If the set top box 108 is not authorized for the software object, there is no need to process the corresponding software object 408 when it is received. Lifetime information allows expiring of the authorization of the software object 408 to prevent use after a certain date or time. Programming tiers are used to restrict authorization of software objects 408 to predefined tiers such that a set top box 108 can only access software objects 408 within a predetermined tier.

The signature 312 is used to verify that portions of both the authorization message 300 and corresponding software message 400 are authentic. A hash function such as SHA-1 or MD5 is run over the whole signatory group, whereafter the result is run through a signing algorithm such as RSA, ECC and DSA to produce the signature. Alternatively, a simple CRC algorithm could be used for the hash function, whereafter the result could be sent through an encryption algorithm such as or triple-DES and DES to produce the signature. When compiling the authorization message 300, the PROS software 204 calculates the signature 312 over the whole signatory group 500 before inserting the signature 312 into the authorization message 300. The set top box 108 calculates the signature of the signatory group 500 upon receipt of both the authorization and software messages 300, 400. Once the signature is calculated, it is checked against the received signature to authenticate portions of both the authorization and software messages 300, 400. If the signatures do not match, the set top box 108 discards the software message 400 because it presumably came from an improper source.

The first and second checksums 316, 412 are calculated with either linear or non-linear algorithms. These checksums 316, 412 verify the integrity of the data as it is transported to the set top box 108 over the network 216. For example, the checksum could be a cyclic redundancy check (CRC) which performs a binary addition without carry for each byte in the message. The message spooler 208 calculates the checksum 316 as the message 300 is being sent and appends the checksum 316 onto the end of the message 300. Conversely, the set top box 108 calculates the checksum as the message 300 is received and checks the calculated checksum against the checksum 316 in the received message 300. If the calculated and received checksums do not match, an error in transmission has occurred. Messages 300, 400 with errors are discarded whereafter the headend 104 may send replacement messages 300, 400.

The object header 404 includes attributes for the software message 400. Included in the object header 404 are a header length, a software object length, the object identifier, the software version, and a domain identifier. The header length and software object length respectively indicate the lengths of the object header 404 and the software object 408. As described above, the object identifier provides a unique code which allows attributing the authorization message 300 to the software message 400. The software version indicates the version of the software object. Different cable providers are assigned domain identifiers such that all of the set top boxes 108, which might receive a software object 408, can screen for software objects 408 associated with their domain.

The software object 408 includes content the system 200 is designed to deliver to set top boxes 108. Several types of information can be embedded in a software object, such as executable programs, firmware upgrades, run-time programs (e.g., Java® or ActiveX®), programming schedules, billing information, video, audio, or data. The software object can be used immediately after authentication and authorization or at a later time. Additionally, authorization can be programmed to expire after a certain amount of time.

Referring specifically to Fig. 5, the signatory group 500 is shown. This group 500 is comprised of parts of both the authorization message 300 and the software message 400. All the data used to calculate the signature 312 is included in the signatory group 500. Because the signature requires components from both the authorization message 300 and the software message 400, a failed signature check indicates one of the authorization message 300 and the software message 400 cannot be verified as originating from a trusted source. The trusted source being the PROS software 204 that generated the signature 312.

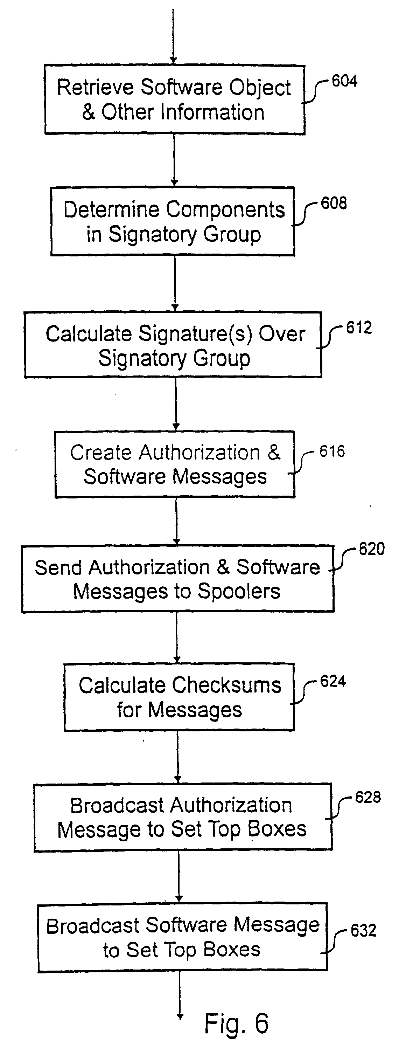

With reference to Fig. 6, a flow diagram of a process for broadcasting a software object 408 is shown. This process uses the PROS Software 204 to compile the information and create a signature whereafter the authorization message 300 and corresponding software message 400 are sent to their respective spoolers 208, 212. Preferably, the messages 300, 400 are sent through different transmission channels at different times to make authentication more robust.

The process begins in step 604 where the software object 408 and other information are loaded into the PROS software 204. This information includes such things as software access requirements, resource access requirements, configuration data, unsigned software objects, object information, etc. In step 608, the PROS software 204 determines the components of the signatory group 500. Once the signatory group 500 is determined, the signature 312 over that group 500 is calculated in step 612. More than one signature could be calculated in this step 612 to support different set top boxes 108, as explained further below.

Once the signature 312 is calculated, the authorization and software messages 300, 400 are created in step 616. At this point, the authorization and software messages 300, 400 are complete except for the checksums 316, 412. In step 620, the authorization and software messages 300, 400 are respectively sent to the message and object spoolers 208, 212. Once the spoolers 208, 212 receive the authorization and software messages 300, 400, the checksums 316, 412 are calculated to complete all fields in the messages 300, 400.

After the authorization and software messages 300, 400 are complete, they are separately sent to the set top boxes. In step 628, the authorization message 300 is broadcast to the set top boxes 108 over a network 216. The network 216 could include a control data channel, MPEG data stream and/or packet switched network. After the authorization message 300 is sent, the software message 400 is broadcast in step 632. A predetermined time delay may be used between steps 628 and 632 to separate the messages 300, 400. In this embodiment, the messages 300, 400 are sent through different transmission pathways. The authorization message 300 is sent over an out-of-band control data channel and the software message 400 is sent through a statistically multiplexed MPEG data stream.

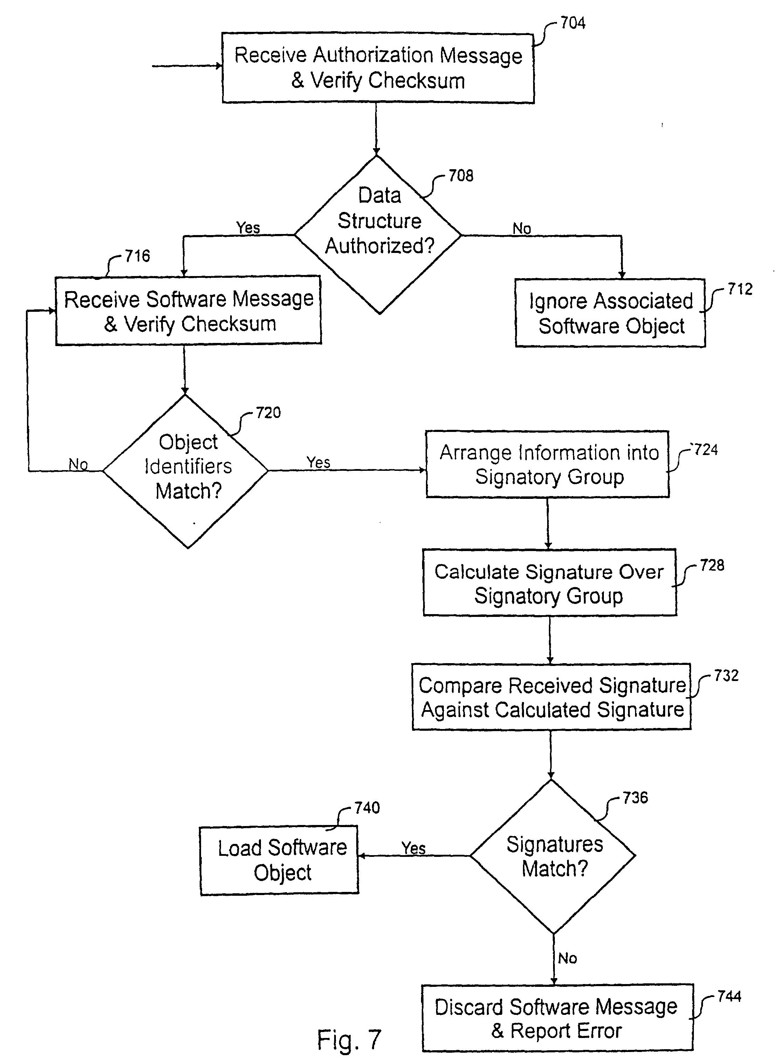

Referring next to Fig. 7, a flow diagram is shown that verifies, authenticates and authorizes a software object 408. This process is performed on each set top box 108 that receives the authorization and software messages 300, 400 even if the software object 408 is not authorized and cannot be executed.

The process begins in step 704 where the authorization message 300 is received from the network 216. After receipt of the message 300, the first checksum 316 is verified to trap broadcast errors. A threshold determination is made to decide if the data structure 308 is authorized in step 708. Things such as cost information, entitlement information, lifetime information, and a program tier is used in this determination. If it is determined that the software object 408 is not authorized, it is ignored when it arrives in step 712.

Alternatively, processing continues to step 716 if the software object 408 is determined authorized in step 708. In step 716, the software message 400 is received and the second checksum 412 is verified to trap any transmission errors. The object identifiers in the authorization and software messages 300, 400 are compared to match together the messages 300, 400 in step 720. If there is no match, the software message 400 is discarded and processing continues back to step 716 to wait for the correct software message 400.

If the software message 400 has an object identifier which matches the object identifier of the authorization message 300, processing continues to step 724 where the information is arranged into a signatory group 500. Most of the information in the authorization and software messages 300, 400 is used to form the signatory group 500. In step 728, a signature is calculated over the signatory group 500. Once the signature is calculated, it is compared with the received signature 312 in step 732.

If the calculated and received signatures match, as determined in step 736, the software object 408 is authenticated as originating from an approved source. Authenticated software objects 408 are retained and used by the set top box in step 740. If the software object fails authentication in step 736, the software message 400 is discarded and an error is reported back to the headend 104. By using this process, software objects are verified, authorized and authenticated before use.

In light of the above description, a number of advantages of the present invention are readily apparent. Authentication is performed on both the authorization message and the associated content. The authentication is more robust since the authorization message and content are sent to the set top boxes separately such that a pirate would have to know how to reassociate the components in any effort to thwart authentication.

A number of variations and modifications of the invention can also be used. For example, different signature methods could be used which include symmetric and asymmetric using different key sizes. Some embodiments could encrypt the authorization and software messages to further enhance authentication and use entitlement messages to provide the keys.

Some of the above embodiments use a single signature in the authorization message. However, different set top boxes use different signature algorithms and/or keys. To make an authorization message that is understood by all set top boxes, the authorization message can include a number of signatures and each set top box chooses the compatible signature when authenticating the messages.

Although the above embodiments attach the signature to the authorization message, other possibilities are considered within the scope of this invention. For example, the software message could include the signature. Alternatively, the signature could be send separately from both the authorization message and software message. The common thread is that some of the information for which the signature is generated over is sent without the signature. In this way, the signature is disassociated from some information such that a hacker would have to know how to reassociate the information to have the signature match.

Although the invention is described with reference to specific embodiments thereof, the embodiments are merely illustrative, and not limiting, of the invention, the scope of which is to be determined solely by the appended claims.

## Claims

1. Method for distributing information which includes a signature, the method comprising steps of:
generating the signature over first information and second information;
sending the first information over a network;
sending the second information over the network separately from the step of sending the first information; and
sending the signature over the network separately from at least one of the first information and the second information.

2. Method according to claim 1, wherein the first information comprises an authorization data structure and the second information comprises a software object.

3. Method according to claim 1 or 2, further comprising a step of appending the signature to the first information.

4. Method according to one of the preceding claims determining which resources a software object in the second information is entitled to interact with.

5. Method according to one of the preceding claims, wherein the step of sending second information comprises a step of waiting a predetermined time period after the step of sending the first information before sending the second information.

6. Method according to one of the preceding claims, wherein the first information includes authorization information for an associated software object.

7. Method according to one of the preceding claims, wherein:
the step of sending the first information comprises transmitting the first information over a first transmission pathway,
the step of sending the second information comprises transmitting the second information over a second transmission pathway different from the first transmission pathway, and
the step of sending the signature comprises transmitting the signature over a third transmission pathway different from at least one of the first and second transmission pathways.

8. Method for detecting modification of information, the method comprising steps of:
receiving first information from a network;
receiving second information from the network separately from the step of receiving the first information;
receiving a signature from the network separately from at least one of the first and second information; and
authenticating the signature over the first and second information.

9. Method according to claim 8, wherein the first information comprises an authorization data structure and the second information comprises a software object.

10. Method according to claim 8 or 9, wherein:
the step of receiving first information comprises receiving the first information from a first transmission pathway,
the step of receiving second information comprises receiving the second information from a second transmission pathway different from the first transmission pathway, and
the step of receiving a signature comprises receiving the signature from a third transmission pathway different from at least one of the first and second transmission pathways.

11. Method according to one of the preceding claims, further comprising the steps of:
correlating the first information to the second information; and
correlating the signature to the first information and second information.

12. Method according to one of the preceding claims, further comprising a step of determining a lifetime for which the second information is usable.

13. Method according to one of the preceding claims, further comprising a step of checking the first information for an authorization corresponding to the second information.

14. A conditional access system for detecting modification of information, comprising:
an information object;
authorization information, wherein a signature is generated over the information object and the authorization information;
the information object uses a first transmission pathway to a set top box,
the authorization information uses a second transmission pathway to the set top box that is different from the first transmission pathway, and
the signature uses a third transmission pathway to the set top box that is different from at least one of the first and second transmission pathways.

15. Conditional access system according to claim 14, further comprising an authorization message which includes the authorization information and the signature.

16. Conditional access system according to claim 15, wherein the authorization message includes a plurality of signatures.

17. Conditional access system according to claim 16, wherein each of the plurality of signatures uses a different signing algorithm.

18. Conditional access system according to one of the preceding claims, wherein the authorization information includes authorization tiers which pre-authorize a plurality of information objects.

19. Conditional access system according to one of the preceding claims, wherein the information object is sent separately over a network from the authorization information.

20. Method according to one of claims 8 to 13, further comprising steps of:
determining if access of at least one of the first and second information is authorized; and
ignoring the second information if not authorized.

21. Method according to one of claims 8 to 13 or 20, further comprising steps of:
receiving a second signature from the network separately from at least one of the first and second information; and
choosing one of the first signature and the second signature for authentication over the first and second information.

22. Method according to one of claims 1 to 7, further comprising steps of:
generating a second signature over the first information and the second information; and
sending the second signature over the network separately from at least one of the first information and the second information.

## Patentansprüche

1. Ein Verfahren zur Verteilung von einer eine Signatur umfassenden Information, wobei das Verfahren folgende Schritte umfasst:
Erzeugen der Signatur über eine erste Information und eine zweite Information;
Senden der ersten Information über ein Netzwerk;
Senden der zweiten Information über das Netzwerk, unabhängig von dem Schritt des Sendens der ersten Information; und
Senden der Signatur über das Netzwerk, unabhängig von mindestens entweder der ersten Information oder der zweiten Information.

2. Verfahren gemäß Anspruch 1, wobei die erste Information aus einer Autorisierungsdatenstruktur besteht und die zweite Information aus einem Softwareobjekt besteht.

3. Verfahren gemäß Anspruch 1 oder 2, ferner umfassend einen Schritt des Anhängens der Signatur an die erste Information.

4. Verfahren gemäß einem der vorhergehenden Ansprüche, das bestimmt, mit welchen Betriebsmitteln ein Softwareobjekt in der zweiten Information wechselwirken darf.

5. Verfahren gemäß einem der vorhergehenden Ansprüche, wobei der Schritt des Sendens der zweiten Information einen Schritt des Wartens für eine vorgegebene Zeitspanne nach dem Schritt des Sendens der ersten Information vor dem Senden der zweiten Information umfasst.

6. Verfahren gemäß einem der vorhergehenden Ansprüche, wobei die erste Information eine Autorisierungsinformation für ein zugehöriges Softwareobjekt umfasst.

7. Verfahren gemäß einem der vorhergehenden Ansprüche, wobei:
der Schritt des Sendens der ersten Information ein Übertragen der ersten Information über einen ersten Übertragungsweg umfasst,
der Schritt des Sendens der zweiten Information ein Übertragen der zweiten Information über einen zweiten Übertragungsweg umfasst, der sich von dem ersten Übertragungsweg unterscheidet, und
der Schritt des Sendens der Signatur ein Übertragen der Signatur über einen dritten Übertragungsweg umfasst, der sich von mindestens entweder dem ersten oder zweiten Übertragungsweg unterscheidet.

8. Ein Verfahren zum Erkennen einer Informationsmodifikation, wobei das Verfahren folgende Schritte umfasst:
Empfangen der ersten Information von einem Netzwerk;
Empfangen der zweiten Information von dem Netzwerk, unabhängig von dem Schritt des Empfangens der ersten Information;
Empfangen einer Signatur von dem Netzwerk, unabhängig von mindestens entweder der ersten oder zweiten Information; und
Authentisieren der Signatur über die erste und zweite Information.

9. Verfahren gemäß Anspruch 8, wobei die erste Information eine Autorisierungsdatenstruktur umfasst und die zweite Information ein Softwareobjekt umfasst.

10. Verfahren gemäß Anspruch 8 oder 9, wobei:
der Schritt des Empfangens der ersten Information ein Empfangen der ersten Information von einem ersten Übertragungsweg umfasst,
der Schritt des Empfangens der zweiten Information ein Empfangen der zweiten Information von einem zweiten Übertragungsweg umfasst, der sich von dem ersten Übertragungsweg unterscheidet, und
der Schritt des Empfangens einer Signatur ein Empfangen der Signatur von einem dritten Übertragungsweg umfasst, der sich von mindestens entweder dem ersten oder zweiten Übertragungsweg unterscheidet.

11. Verfahren gemäß einem der vorhergehenden Ansprüche, ferner folgende Schritte umfassend:
die erste Information mit der zweiten Information in Wechselbeziehung bringen; und
die Signatur mit der ersten Information und der zweiten Information in Wechselbeziehung bringen.

12. Verfahren gemäß einem der vorhergehenden Ansprüche, ferner umfassend einen Schritt des Bestimmens einer Lebensdauer, während der die zweite Information verwendbar ist.

13. Verfahren gemäß einem der vorhergehenden Ansprüche, ferner umfassend einen Schritt des Prüfens der ersten Information hinsichtlich einer der zweiten Information entsprechenden Autorisierung.

14. Ein Zugangsberechtigungssystem zum Erkennen einer Informationsmodifikation, umfassend:
ein Informationsobjekt;
eine Autorisierungsinformation, wobei über das Informationsobjekt und die Autorisierungsinformation eine Signatur erzeugt wird;
das Informationsobjekt einen ersten Übertragungsweg zu einer Set-Top-Box verwendet,
die Autorisierungsinformation einen sich von dem ersten Übertragungsweg unterscheidenden zweiten Übertragungsweg zu der Set-Top-Box verwendet, und
die Signatur einen sich von mindestens dem ersten oder zweiten Übertragungsweg unterscheidenden dritten Übertragungsweg zu der Set-Top-Box verwendet.

15. Zugangsberechtigungssystem gemäß Anspruch 14, ferner umfassend eine die Autorisierungsinformation und die Signatur umfassende Autorisierungsnachricht.

16. Zugangsberechtigungssystem gemäß Anspruch 15, wobei die Autorisierungsnachricht eine Vielzahl von Signaturen umfasst.

17. Zugangsberechtigungssystem gemäß Anspruch 16, wobei jede der Vielzahl von Signaturen einen unterschiedlichen Unterzeichnungs-Algorithmus verwendet.

18. Zugangsberechtigungssystem gemäß einem der vorhergehenden Ansprüche, wobei die Autorisierungsinformation Autorisierungsstufen, die eine Vielzahl von Informationsobjekten vorautorisieren, umfasst.

19. Zugangsberechtigungssystem gemäß einem der vorhergehenden Ansprüche, wobei das Informationsobjekt von der Autorisierungsinformation unabhängig über ein Netzwerk gesandt wird.

20. Verfahren gemäß einem der Ansprüche 8 bis 13, ferner umfassend folgende Schritte:
Bestimmen, ob der Zugang zu mindestens entweder der ersten oder zweiten Information autorisiert ist; und
Ignorieren der zweiten Information, falls diese nicht autorisiert ist.

21. Verfahren gemäß einem der Ansprüche 8 bis 13 oder 20, ferner umfassend folgende Schritte:
Empfangen einer zweiten Signatur von dem Netzwerk, unabhängig von mindestens entweder der ersten oder zweiten Information; und
Wählen der entweder ersten Signatur oder zweiten Signatur zur Authentisierung über die erste und zweite Information.

22. Verfahren gemäß einem der Ansprüche 1 bis 7, ferner umfassend folgende Schritte:
Erzeugen einer zweiten Signatur über die erste Information und die zweite Information; und
Senden der zweiten Signatur über das Netzwerk, unabhängig von mindestens entweder der ersten Information oder der zweiten Information.

## Revendications

1. Procédé pour distribuer des informations qui comportent une signature, le procédé comprenant les étapes consistant :
à générer la signature sur des premières informations et des deuxièmes informations ;
à envoyer les premières informations sur un réseau ;
à envoyer les deuxièmes informations sur le réseau indépendamment de l'étape consistant à envoyer les premières informations ; et
à envoyer la signature sur le réseau indépendamment d'au moins soit les premières informations, soit les deuxièmes informations.

2. Procédé selon la revendication 1, dans lequel les premières informations comprennent une structure de données d'autorisation et les deuxièmes informations comprennent un objet logiciel.

3. Procédé selon la revendication 1 ou la revendication 2, comprenant de plus une étape consistant à ajouter la signature aux premières informations.

4. Procédé selon l'une des revendications précédentes déterminant les ressources avec lesquelles un objet logiciel dans les deuxièmes informations a le droit d'interagir.

5. Procédé selon l'une des revendications précédentes, dans lequel l'étape consistant à envoyer des deuxièmes informations comprend une étape consistant à attendre pendant un laps de temps prédéterminé après l'étape consistant à envoyer les premières informations avant d'envoyer les deuxièmes informations.

6. Procédé selon l'une des revendications précédentes, dans lequel les premières informations comportent des informations d'autorisation pour un objet logiciel associé.

7. Procédé selon l'une des revendications précédentes, dans lequel :
l'étape consistant à envoyer les premières informations consiste à transmettre les premières informations sur une première voie de transmission,
l'étape consistant à envoyer les deuxièmes informations consiste à transmettre les deuxièmes informations sur une deuxième voie de transmission qui diffère de la première voie de transmission, et
l'étape consistant à envoyer la signature consiste à transmettre la signature sur une troisième voie de transmission qui diffère d'au moins soit la première voie de transmission, soit la deuxième voie de transmission.

8. Procédé pour détecter une modification d'informations, le procédé comprenant les étapes consistant :
à recevoir d'un réseau des premières informations ;
à recevoir du réseau des deuxièmes informations indépendamment de l'étape consistant à recevoir les premières informations ;
à recevoir du réseau une signature indépendamment d'au moins soit les premières informations, soit les deuxièmes informations ; et
à authentifier la signature sur les premières et deuxièmes informations.

9. Procédé selon la revendication 8, dans lequel les premières informations comprennent une structure de données d'autorisation et les deuxièmes informations comprennent un objet logiciel.

10. Procédé selon la revendication 8 ou la revendication 9, dans lequel :
l'étape consistant à recevoir des premières informations consiste à recevoir les premières informations d'une première voie de transmission,
l'étape consistant à recevoir des deuxièmes informations consiste à recevoir les deuxièmes informations d'une deuxième voie de transmission qui diffère de la première voie de transmission, et
l'étape consistant à recevoir une signature consiste à recevoir la signature d'une troisième voie de transmission qui diffère d'au moins soit la première voie de transmission, soit la deuxième voie de transmission.

11. Procédé selon l'une des revendications précédentes, comprenant de plus les étapes consistant :
à mettre en corrélation les premières informations avec les deuxièmes informations ; et
à mettre en corrélation la signature avec les premières informations et les deuxièmes informations.

12. Procédé selon l'une des revendications précédentes, comprenant en outre une étape consistant à déterminer une durée de vie pendant laquelle les deuxièmes informations peuvent être utilisées.

13. Procédé selon l'une des revendications précédentes, comprenant en outre une étape consistant à chercher une autorisation correspondant aux deuxièmes informations dans les premières informations.

14. Un système d'accès conditionnel pour détecter une modification d'informations, comprenant :
un objet information ;
des informations d'autorisation, dans lequel une signature est générée sur l'objet information et les informations d'autorisation ;
l'objet information utilise une première voie de transmission jusqu'à un boîtier "set-top box",
les informations d'autorisation utilisent une deuxième voie de transmission jusqu'au boîtier "set-top box" qui diffère de la première voie de transmission, et
la signature utilise une troisième voie de transmission jusqu'au boîtier "set-top box" qui diffère d'au moins soit la première voie de transmission, soit la deuxième voie de transmission.

15. Système d'accès conditionnel selon la revendication 14, comprenant en outre un message d'autorisation qui comporte les informations d'autorisation et la signature.

16. Système d'accès conditionnel selon la revendication 15, dans lequel le message d'autorisation comporte une pluralité de signatures.

17. Système d'accès conditionnel selon la revendication 16, dans lequel chaque signature de la pluralité de signatures utilise un algorithme de signature différent.

18. Système d'accès conditionnel selon l'une des revendications précédentes, dans lequel les informations d'autorisation comportent des niveaux d'autorisation qui pré-autorisent une pluralité d'objets informations.

19. Système d'accès conditionnel selon l'une des revendications précédentes, dans lequel l'objet information est envoyé sur un réseau indépendamment des informations d'autorisation.

20. Procédé selon l'une des revendications 8 à 13, comprenant de plus les étapes consistant :
à déterminer si l'accès au moins soit aux premières informations, soit aux deuxièmes informations est autorisé ; et
à ignorer les deuxièmes informations en cas de non-autorisation.

21. Procédé selon l'une des revendications 8 à 13 ou 20, comprenant de plus les étapes consistant :
à recevoir du réseau une deuxième signature indépendamment d'au moins soit les premières informations, soit les deuxièmes informations ; et
à choisir une signature parmi la première signature et la deuxième signature pour authentification sur les premières et deuxièmes informations.

22. Procédé selon l'une des revendications 1 à 7, comprenant de plus les étapes consistant :
à générer une deuxième signature sur les premières informations et les deuxièmes informations ; et
à envoyer la deuxième signature sur le réseau indépendamment d'au moins soit les premières informations, soit les deuxièmes informations.
